# EUROPEAN PATENT SPECIFICATION

(11) **EP 3 858 713 B1**
(45) Date of publication and mention of the grant of the patent: **22.04.2026**
(21) Application number: 19817798.2
(22) Date of filing: 26.09.2019
(51) Int. Cl.: B62D 33/04, B62D 53/06, B60R 5/04

(54) **ACCESSORY FOR CHASSIS AND CHASSIS WITH VARIABLE LOADING CAPACITY**
FAHRWERKZUBEHÖR UND FAHRWERK MIT VARIABLER LADEFÄHIGKEIT
ACCESSOIRE POUR CHÂSSIS ET CHÂSSIS AYANT UNE CAPACITÉ DE CHARGE VARIABLE

(30) Priority: 27.09.2018 ES 201831466 U
(43) Date of publication of application: 04.08.2021
(73) Proprietor: Efitrans Efficient Logistics, S.L., 36202 Vigo (Pontevedra) (ES)
(72) Inventor: CABRERA AREAL, Miguel, 36202 Vigo, Pontevedra (ES)
(74) Representative: ABG Intellectual Property Law, S.L.
(86) International application number: PCT/ES2019/070638
(87) International publication number: WO 2020/065116

(56) References cited:
- CN-A- 106 428 252
- DE-A1- 102006 049 595
- ES-U- 1 222 026
- GB-A- 2 451 126
- GB-A- 2 471 399
- JP-A- S 541 524
- JP-U- S4 853 721

## Description

### Field of the Art

The present invention relates to an accessory for coupling thereof to a chassis and a chassis with variable loading capacity of a truck, trailer, or semi-trailer intended for transporting freight, i.e., a chassis with a variable storage volume capacity. Said chassis will be associated, for example, with a vehicle for transporting freight, which allows modifying the length of its body to adapt to the measurement of the pallets or packages to be transported, optimizing the space available in the vehicle to perform loading. In other embodiments of the present invention, the chassis is associated with a trailer which can be attached in a modular manner to other trailers or to vehicles of the type mentioned above.

### Background of the Invention

Various freight vehicles with different configurations such as, for example, articulated vehicles, rigid trucks, trailers, and road trains, are available today. However, in all of these vehicles the body or compartment intended for storing cargo has a fixed measurement based on what has been considered at the time of manufacture, and this measurement is often not adapted to the dimensions of the packages being transported, where it is impossible to use the entire loading surface available.

There are standard (American and European) pallet measurements, but most factories have their own parts which they group together forming cargo packages, and the dimensions of these packages vary greatly depending on what they manufacture, so it is impossible to manufacture a body having dimensions such that they can be adapted to all cargoes.

Document JPS4853721U discloses a vehicle with an extensible rear cabin for allowing passengers to sleep in the passenger compartment.

### Description of the Invention

The present invention relates to a vehicle for transporting freight capable of adapting to the different measurements of the pallets or packages to be loaded by means of the complete extension of its body. Specifically, in order to provide a solution to the problems mentioned above, the present invention discloses a variable storage accessory for coupling thereof to a chassis, said chassis having a structural receiver attached to the chassis, wherein the accessory comprises:
- a coupling element intended for being attached with sliding capacity along the structural receiver in a telescopic manner;
- two longitudinal beams located on either side of the coupling element;
- two posts attached to the longitudinal beams, said posts being perpendicular to the longitudinal beams and defining the height and width of the accessory;

wherein the coupling element has an expanded position in which the coupling element moves longitudinally, moving the posts away from the chassis, and a contracted position in which the coupling element moves longitudinally, moving the posts closer to the chassis;
wherein the accessory comprises a lower panel arranged between the longitudinal beams, such that in the contracted position the panel is partially located on a support surface associated with the chassis, and in the expanded position the panel is arranged adjacent to the support surface; and
wherein the accessory comprises wedges in the lower panel, located in the front area of said panel on the profiles of the coupling element.

More preferably, in the lower area of the coupling element, a support, which moves integrally with the accessory, is installed or arranged in a position normal to the floor.

In one embodiment, the structural receiver is a tubular element receiving therein the coupling element.

Furthermore, the accessory may comprise an actuator for moving the coupling element between the expanded position and the contracted position. The actuator can be, for example, a hydraulic actuator.

Preferably, the accessory comprises at least one side panel, said side panel being arranged longitudinally along one of the longitudinal beams and being collapsible with respect to one of the posts. A plurality of supports for anchoring cargo holding barriers can be arranged or installed in said side panels.

In one embodiment, the accessory comprises at least one rear panel, said rear panel extending transversely with respect to the longitudinal beams and being collapsible with respect to one of the posts. Furthermore, the accessory may comprise an upper panel attached to the upper part of the posts, such that a closed container is provided.

The accessory of the present invention is preferably an accessory for use in a chassis of a truck, trailer, or semi-trailer intended for transporting freight.

Moreover, the present invention discloses a chassis with variable storage capacity comprising a structural receiver and an accessory which in turn comprises:
- a coupling element intended for being attached with sliding capacity along the structural receiver in a telescopic manner;
- two longitudinal beams located on either side of the coupling element;
- two posts attached to the longitudinal beams, said posts being perpendicular to the longitudinal beams and defining the height and width of the accessory;

wherein the coupling element has an expanded position in which the coupling element moves longitudinally such that the length of the structural receiver and the coupling element is greater and a contracted position in which the length of the structural receiver and the coupling element is smaller;
wherein the accessory comprises a lower panel arranged between the longitudinal beams, such that in the contracted position the panel is partially located on a fixed support surface with respect to the chassis, and in the expanded position the panel is arranged adjacent to the support surface;
wherein the accessory comprises wedges in the lower panel, located in the front area of said panel on the profiles of the coupling element.

The structural receiver can be, for example, a tubular element receiving therein the coupling element.

Furthermore, the chassis or the accessory may comprise an actuator for moving the coupling element between the expanded position and the contracted position. Said actuator is preferably a hydraulic actuator.

Furthermore, both the chassis and the accessory may comprise an upper panel, thereby having a closed storage volume.

Specifically, the chassis can be, for example, the chassis of a truck, trailer, or semi-trailer intended for transporting freight.

### Brief Description of the Drawings

The attached drawings show illustrative and non-limiting embodiments of the system according to the present invention, in which:
Figure 1 shows a perspective view of a variable storage accessory arranged in the chassis of a truck, the accessory being in the contracted position.
Figure 2 shows a perspective view of a variable storage accessory arranged in the chassis of a truck, the accessory being in an extended position.
Figure 3 shows a detailed view of a variable storage accessory according to the present invention.
Figure 4 shows a view of the chassis, without the accessory installed, in which the profiles along which the accessory would move can be seen.
Figure 5 shows a view of the lower part of a chassis comprising an accessory according to the present invention in its contracted position.
Figure 6 shows a detailed view of an accessory, according to the present invention, installed in a chassis.
Figure 7 shows a perspective view of a truck incorporating an exemplary accessory according to the present invention.
Figure 8 shows the circulating position of a road train, with the accessory partially extended in the truck and trailer
Figure 9 shows the loading position of a road train, with the accessory fully extended both in the truck and in the trailer.
Figure 10 shows an exemplary embodiment in which supports keeping the attachment between the truck and the trailer rigid at the time of performing loading are incorporated.
Figure 11 shows an exemplary embodiment in which small wedges are incorporated to favor the sliding of the accessory in the contraction operation when there are pallets supported on the floor.

### Preferred Embodiment of the Invention

The present invention allows providing a vehicle, for example, for transporting freight that can adapt to the different measurements of the pallets or packages to be loaded by means of increasing the volume that it can transport, i.e., by means of extending the volume which the chassis of said vehicle is capable of having.

At present, freight is generally transported on vehicles with a flat board arranged on the floor, a body closed with tarpaulins arranged over the roof and on either side, or on vehicles with a rigid body and closed with doors in the rear part thereof. The most common configuration involves the use of tarpaulins both on the sides and over the roof and a rear door, because the tarpaulins are sliding tarpaulins, so loading can be performed from the side, the upper part, as well as the rear part of the vehicle, in the event of a trailer. The only modularity some of these vehicles have is the ability to lift the roof several centimeters to facilitate side loading of the pallets, as this allows obtaining a little more free height to enable entering with the freight.

The present invention therefore solves the problem that current vehicles have for transporting freight, given that, depending on the dimensions of the packages or pallets to be loaded, the dimensions thereof can be modified to adapt to the total length that these packages or pallets occupy.

The accessory and the chassis of the present invention are intended for use on a standard freight vehicle, truck, trailer, or semi-trailer transporting freight and comprising at least one extendible structure associated with a chassis.

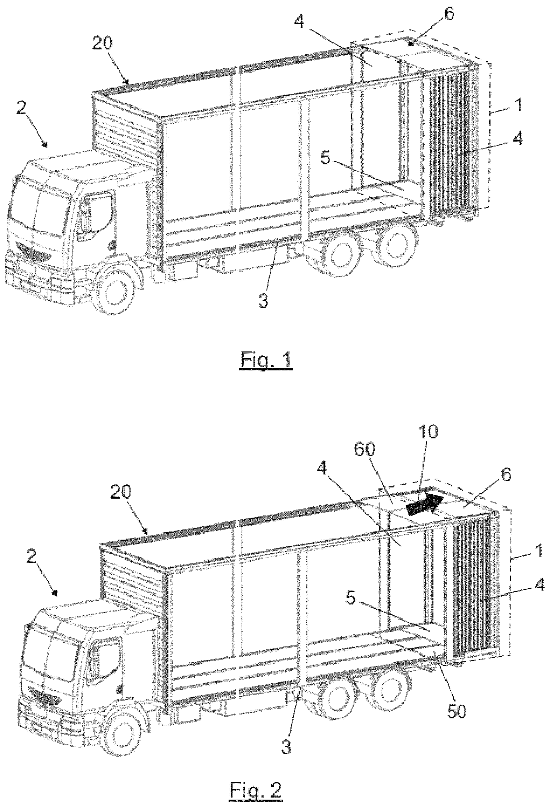

Figure 1 shows an exemplary embodiment of the present invention in which an accessory (1) is provided for increasing the volume that can be transported on a chassis (3) associated with a truck (2). The chassis (3) comprises a structure (20) intended for working as an envelope for the purpose of containing a certain cargo.

The accessory (1) of Figure 1 has a pair of side panels (4), an upper panel (6), and a lower panel (5), the lower panel being in the contracted position (as shown in Figure 1 arranged on the floor of the chassis, i.e., on a panel fixed with respect to the chassis (3). In a preferred embodiment, in the lower area of the lower panel, a support, which moves integrally with the accessory, is installed in a position normal to the floor.

The accessory (1) is arranged to enable transitioning from a contracted position, in which the chassis can store a first volume, to an expanded position, in which the chassis can store a second volume that is greater than said first volume.

Figure 2 shows an accessory (1) like the one of Figure 1 in the expanded position. As can be observed in Figure 2, a longitudinal movement (10) out of the chassis (3) has been performed on the accessory (1), increasing the longitudinal distance of the chassis by the distance travelled as a result of the longitudinal movement (10).

It can be observed in Figures 1 and 2 that, while in the contracted position (Figure 1) the lower panel (5) of the is arranged at least partially on the floor of the chassis, in the expanded position (Figure 2), the lower panel (5) is arranged adjacent to the floor of the chassis (50), such that it increases the surface of the chassis which can hold cargo. In some embodiments of the present invention, in the expanded position the lower panel (5) is arranged partially on the floor of the chassis (50), while in the contracted position it is arranged in its entirety substantially on the floor of the chassis (50), or at least a larger surface of the lower panel (5) is arranged on the floor of the chassis (50).

It is important to point out that in order to maintain the uniformity of the chassis-accessory assembly, the lower panel has a thickness between 1 mm and 10 mm, such that the thickness of said lower panel (5) defines the maximum protrusion of the chassis-accessory assembly in the direction normal to the lower surface. In a particularly preferred embodiment, the thickness of said lower panel (5) is 5 mm.

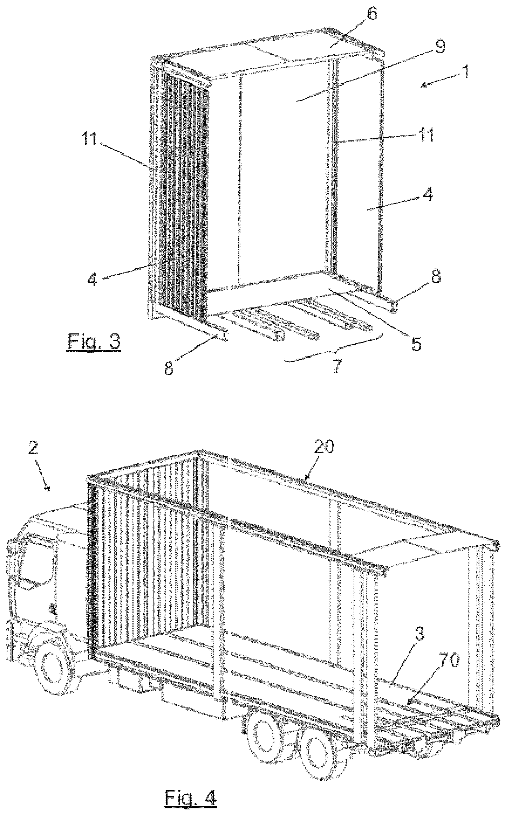

Figure 3 shows an example of an accessory (1) according to the present invention; said accessory comprises a coupling element (7) intended for being attached with sliding capacity along the structural receiver in a telescopic manner; two longitudinal beams (8) located on either side of the coupling element, two posts (11) the longitudinal beams (8), said posts (11) being perpendicular to the longitudinal beams (8) and defining the height and width of the accessory.

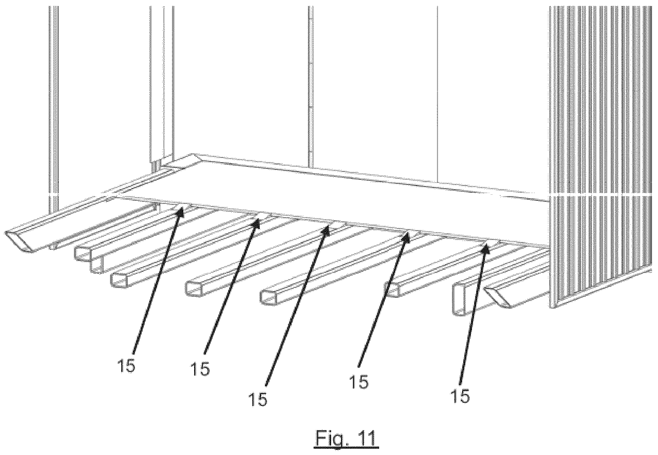

In a particularly preferred embodiment which is shown in Figure 11, the device also has small wedges (15) in the front area of the lower panel, as can be observed in Figure 11, to prevent the pallets positioned on the floor, specifically in the area of the lower panel which is arranged between the expanded and contracted positions, from getting caught when the coupling element is changed from the contracted position to the expanded position or vice versa, because this area is slightly lower.

Returning to the example of Figure 3, the coupling element (7) has an expanded position in which the coupling element moves longitudinally, moving the posts away from the chassis, and a contracted position in which the coupling element moves longitudinally, moving the posts closer to the chassis. Said expanded or contracted position is defined by the distance the coupler slides on the receiver arranged in the chassis, i.e., the path of said telescopic mechanism formed between the receiver and the coupler (7).

Figure 4 shows a series of receivers (70) arranged in the chassis (3), on which the accessory slides to increase or decrease freight loading capacity. In the vicinities of the rearmost part of the body, on both sides, there is installed a double or single moving structural post system which allows making the entire structure of this fixed area of the chassis firm, which thereby allows contracting and expanding the accessory in a more stable manner and fixing it to this double or single post system to provide consistency to the entire structure.

In one embodiment, the accessory (1) is manufactured from steel profiles which are positioned with respect to the chassis in a telescopic manner, move along the inside of the receivers arranged in the chassis, as shown in Figure 4, and in one embodiment can be moved by an actuator.

In a preferred embodiment, the actuator is a hydraulic actuator, such that the length of the loading area can be increased, such that the extendible structure would be a prolongation of the floor of the loading body, thereby preventing the possibility of there being gaps, a situation that would not be valid for performing this type of loading with pallets. It also comprises another extendible structure in the roof, formed by telescopic side profiles and bent metal sheets in the form of sandwich panel forming the roof, the extendible structure moving integrally with the structure of the floor as they are attached to one another by means of vertical posts located on the side thereof. For creating extension and for the body of the vehicle to remain closed and continuous, collapsible metal plates are installed on the side, the metal plate having profiles for attachment to the tarpaulin located at different heights, where fastening to the tarpaulin is enabled regardless of the extension, without having to install special telescopic tarpaulins. A longer body is thereby obtained without modifying the internal characteristics thereof, according to the loading requirement.

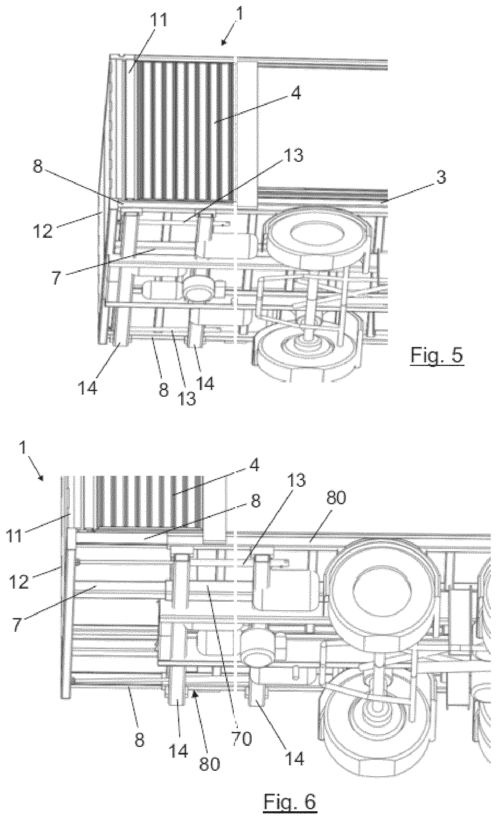

Figures 5 and 6 show an example of the interaction between the accessory and the chassis, in which Figure 5 shows the accessory (1) in the contracted position and Figure 6 shows the accessory (1) in the expanded position. As observed in Figures 5 and 6, the accessory (1), specifically the coupler (7), fits with a receiver (70) associated with the chassis and is firmly attached thereto. Alternatively, the chassis (3) can have second receivers (80) for receiving the longitudinal beams (8) of the accessory (1) in order to make the accessory-chassis assembly more compact. These receivers can be observed in Figure 4.

Furthermore, the chassis (3) can have additional structural elements, such as cross members (14), to assure the rigidity of the accessory-chassis assembly.

Moreover, to transition from the contracted position to the expanded position, the actuator and/or the chassis can have a series of actuators (13), the function of which is to perform a longitudinal movement of the coupler (7) such that the distance at which the coupler comes into contact with the receiver (70) arranged in the chassis is modified, and accordingly, the effective longitudinal distance of the chassis-accessory assembly that in turn defines the volume that can be stored on the chassis (3).

The accessory (1) is concealed in the subchassis (3), for example, of a truck or a trailer. Furthermore, in a preferred embodiment the vehicle has a series of posts associated with the chassis for holding side tarpaulins and a roof tarpaulin and at least one moving post which, in a preferred form of manufacture, will be two moving posts attached to one another, where it can also be a single moving post, such that they generate in the rear part of the body on both sides a rigid gantry, in which the accessory fits in any of its extended or contracted position, a solid chassis-accessory system thus being obtained in all the positions. In the rear part, the accessory (1) can incorporate at least one, and preferably a pair of, doors (12) that are collapsible with respect to the posts (11) of the accessory, for example, by means of hinged connections.

The transition from the contracted position to the extended position is performed by means of the integral longitudinal movement of the entire accessory (1). For example, the hydraulic actuator (13) can be integrally attached with the chassis (3) with a rod configured for longitudinally moving the coupler (7), and when the coupler moves, the entire accessory (1) also moves.

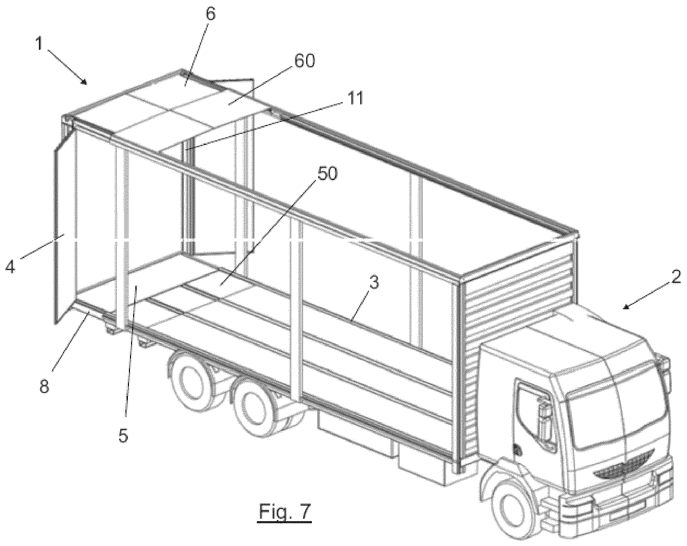

Preferably, the tarpaulin associated with the structure of the chassis is not extendible. To cover the free area remaining on the sides when extension is performed, a side panel (4) is integrally attached to the post with a plurality of attachments for attaching an additional tarpaulin at different distances and obtaining a leak-tight body regardless of the extension thereof. As shown in Figure 7, said side panel (4) may be collapsible with respect to the posts (11), and in a particularly preferred embodiment they can be opened 180° to allow side loading. Said side panel can have a vertical extension, such that when lifting the roof, the side panel moves integrally therewith and covers the gap the roof leaves on the sides when being lifted, such that the body of the vehicle is closed at all times. This side panel has closures in its front-most part for fixing the position thereof when it is closed. The floor is kept substantially flat, i.e., without projections in the direction normal to the plane defined by the floor (50) and the lower panel (5) regardless of the extension, and the roof remains continuous between the roof of the chassis (60) and the upper panel (6) without having to arrange an extendible tarpaulin. In a particular embodiment, each side panel (14) has installed in the inner area, a plurality of supports for anchoring cargo holding barriers.

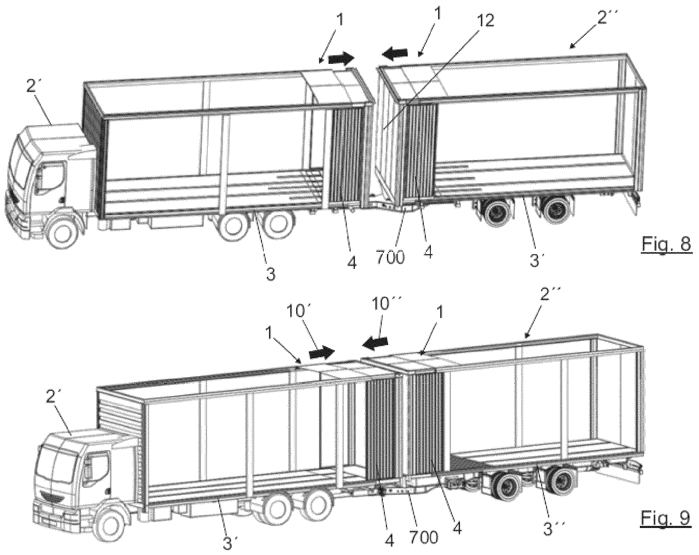

Figures 8 and 9 show a preferred way of using an accessory (1) according to the present invention in several types of chassis. An example of a vehicle configuration for the installation of the accessories (1) according to the present invention is a road train, i.e., a vehicle formed by a truck (2') and a trailer (2"). This configuration is particularly useful because when one accessory (1) is installed in the rear part of the truck (2') and another accessory (1) in the front part of the trailer (2"), the loading capacity is maximized given that the loading area can be adapted twice.

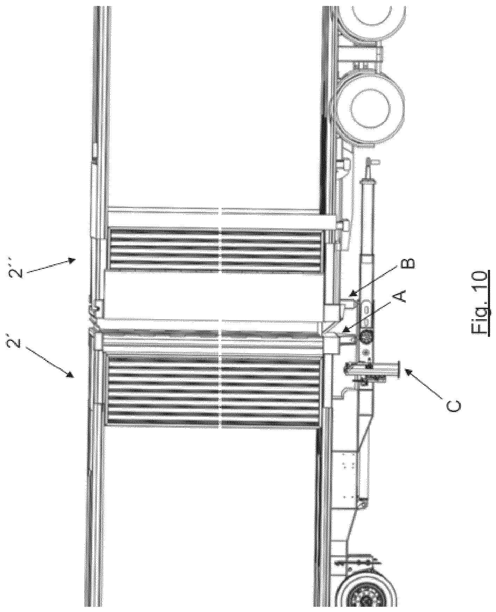

Furthermore, this configuration provided with the accessory (1) of the present invention has all the advantages of a standard trailer for transporting freight, but with a higher capacity, because it allows side and rear loading. Rear loading is achieved because the bodies of the truck and the trailer can be attached by means of an interconnector (700), for example, for firmly attaching the receivers (70) of each one of the chassis (3', 3"), creating a continuous loading surface of, for example, 15 m. Rear loading stability is substantially the same as in a standard truck as a result of the supports provided to the system and the absence of substantial projections in the plane normal to the assembly formed by the lower panels and the floor of the chassis (3', 3"). The interconnector (700) can be a support in the drawbar of the trailer to prevent the central area of both bodies from bending when a forklift with the load is passed through or when the vehicle moves, as can be observed in Figure 10 in which the supports keeping the attachment between the truck and the trailer firm are shown. This system of supports is formed by three supports, one which holds the accessory present in the trailer (A), a second one that is present in the accessory of the truck (B), and a third one (C) which prevents the interconnector (700) from moving vertically.

The extendible rear area of the chassis of the truck (3') and the front area of the chassis of the trailer (3") according to the preferred embodiment include a tubular structure in the lower area, formed by structural profiles which, in the extension movement, move along the inside of the profiles forming the on frame of the truck. The upper part of the extendible structure is formed by two side structural profiles between which there is installed a bent metal sheet which performs the function of a roof, so as to keep the body closed when the extendible is extended. There is installed in the rear part a vertical post, or in a preferred embodiment two posts attached to one another, such that they firmly attach the tubular structure of the lower area and the upper part.

The rear loading process would be performed based on Figure 1, with both bodies drawn in. First, the extendible structure of the truck (4) would be extended in a first longitudinal direction (10') to the extended position of the accessory (1) associated with the truck (2'), then the extendible structure of the trailer (4) will be extended in a second longitudinal direction (10") to the extended position of the accessory (1) associated with the trailer, thus both bodies would be attached to one another, the supports would be installed between the bodies to provide stability. Once this is done, the truck would be loaded, if the entire loading extension in the truck is not used, the area that is not is drawn in and the trailer is then loaded. Given that the rear doors (12) are collapsible, a compartment is provided which can run entirely from the rear part of the trailer (2") to the front part of the truck (2'), as can be observed in Figure 9.

## Claims

1. A variable storage accessory (1) for the coupling thereof to a chassis (3), said chassis having a structural receiver attached to the chassis, the accessory (1) comprising:
• a coupling element (7) intended for being attached with sliding capacity along the structural receiver in a telescopic manner;
• two longitudinal beams (8) located on either side of the coupling element (7);
• two posts (11) attached to the longitudinal beams, said posts (11) being perpendicular to the longitudinal beams (8) and defining the height and width of the accessory (1);
wherein the coupling element (7) has an expanded position in which the coupling element (7) moves longitudinally, moving the posts (11) away from the chassis (3), and a contracted position in which the coupling element (7) moves longitudinally, moving the posts (11) closer to the chassis (3);
wherein the accessory comprises a lower panel (5) arranged between the longitudinal beams (8), such that in the contracted position the panel (5) is partially located on a support surface associated with the chassis (3), and in the expanded position the panel (5) is arranged adjacent to the support surface;
**characterized in that** the accessory comprises wedges in the lower panel (5), located in the front area of said panel (5) on the profiles of the coupling element (7).

2. The accessory (1) according to claim 1, **characterized in that** in the lower area of the coupling element (7), a support, which moves integrally with the accessory (1), is installed in a position normal to the floor.

3. The accessory (1) according to any of the preceding claims, **characterized in that** it comprises an actuator (13) for moving the coupling element (7) between the expanded position and the contracted position.

4. The accessory (1) according to claim 3, **characterized in that** the actuator (13) is a hydraulic actuator.

5. The accessory (1) according to any of the preceding claims, **characterized in that** it comprises at least one side panel (4), said side panel (4) being arranged longitudinally along one of the longitudinal beams (8) and being collapsible with respect to one of the posts (11).

6. The accessory (1) according to claim 5, **characterized in that** there is a plurality of supports for anchoring cargo holding barriers installed in said side panels (4).

7. The accessory (1) according to any of the preceding claims, **characterized in that** it comprises at least one rear panel, said rear panel extending transversally with respect to the longitudinal beams (8) and being collapsible with respect to one of the posts (11).

8. The accessory (1) according to any of the preceding claims, **characterized in that** it comprises an upper panel (6) attached to the upper part of the posts (11).

9. The accessory (1) according to any of the preceding claims, **characterized in that** it is an accessory (1) for use in a chassis (3) of a truck (2), trailer, or semi-trailer intended for transporting freight.

10. A chassis (3) with variable storage capacity, the chassis (3) comprising a structural receiver and an accessory (1) comprising:
• a coupling element (7) intended for being attached with sliding capacity along the structural receiver in a telescopic manner;
• two longitudinal beams (8) located on either side of the coupling element (7);
• two posts (11) attached to the longitudinal beams (8), said posts (11) being perpendicular to the longitudinal beams (8) and defining the height and width of the accessory (1);
wherein the coupling element (7) has an expanded position in which the coupling element (7) moves longitudinally such that the length of the structural receiver and the coupling element (7) is greater and a contracted position in which the length of the structural receiver and the coupling element (7) is smaller;
wherein the accessory comprises a lower panel (5) arranged between the longitudinal beams (8), such that in the contracted position the panel (5) is partially located on a fixed support surface with respect to the chassis (3), and in the expanded position the panel (5) is arranged adjacent to the support surface;
**characterized in that** the accessory comprises wedges in the lower panel (5), located in the front area of said panel (5) on the profiles of the coupling element (7).

11. The chassis (3) according to claim 10, **characterized in that** the structural receiver is a tubular element receiving therein the coupling element (7).

12. The chassis (3) according to any of claims 10 or 11, **characterized in that** it comprises an actuator for moving the coupling element (7) between the expanded position and the contracted position.

13. The chassis (3) according to claim 12, **characterized in that** the actuator is a hydraulic actuator.

14. The chassis (3) according to any of claims 10 to 13, **characterized in that** it comprises an upper panel (6).

15. The chassis (3) according to any of claims 10 to 14, **characterized in that** the chassis (3) is a chassis of a truck (2), trailer, or semi-trailer intended for transporting freight.

## Patentansprüche

1. Ein variables Ladungszubehörteil (1) zum Verbinden desselben mit einem Fahrgestell (3), wobei das Fahrgestell eine am Fahrgestell angebrachte strukturelle Aufnahmevorrichtung aufweist, wobei das Zubehörteil (1) umfasst:
• ein Kupplungselement (7), das dazu bestimmt ist, mit Gleitfähigkeit entlang der strukturellen Aufnahmevorrichtung teleskopartig befestigt zu werden;
• zwei Längsträger (8), die auf beiden Seiten des Kupplungselements (7) angeordnet sind;
• zwei an den Längsträgern befestigte Pfosten (11), wobei die Pfosten (11) senkrecht zu den Längsträgern (8) stehen und die Höhe und Breite des Zubehörs (1) bestimmen;
wobei das Kupplungselement (7) eine ausgefahrene Position, in der sich das Kupplungselement (7) in Längsrichtung bewegt und die Pfosten (11) vom Fahrgestell (3) wegbewegt, und eine eingefahrene Position aufweist, in der sich das Kupplungselement (7) in Längsrichtung bewegt und die Pfosten (11) näher an das Fahrgestell (3) heranbewegt;
wobei das Zubehörteil eine zwischen den Längsträgern (8) angeordnete untere Platte (5) umfasst, sodass sich die Platte (5) in der eingefahrenen Position teilweise auf einer mit dem Fahrgestell (3) verbundenen Auflagefläche befindet, und die Platte (5) in der ausgefahrenen Position neben der Auflagefläche angeordnet ist;
**dadurch gekennzeichnet, dass** das Zubehörteil Keile in der unteren Platte (5) umfasst, die sich im vorderen Bereich der Platte (5) an den Profilen des Kupplungselements (7) befinden.

2. Das Zubehörteil (1) gemäß Anspruch 1, **dadurch gekennzeichnet, dass** im unteren Bereich des Kupplungselements (7) eine sich integral mit dem Zubehörteil (1) bewegende Stütze in einer zum Boden normalen Position installiert ist.

3. Das Zubehörteil (1) gemäß einem der vorhergehenden Ansprüche, **dadurch gekennzeichnet, dass** es einen Aktuator (13) zum Bewegen des Kupplungselements (7) zwischen der ausgefahrenen Position und der eingefahrenen Position umfasst.

4. Das Zubehörteil (1) gemäß Anspruch 3, **dadurch gekennzeichnet, dass** der Aktuator (13) ein hydraulischer Aktuator ist.

5. Das Zubehörteil (1) gemäß einem der vorhergehenden Ansprüche, **dadurch gekennzeichnet, dass** es mindestens eine Seitenplatte (4) umfasst, wobei die Seitenplatte (4) in Längsrichtung entlang eines der Längsträger (8) angeordnet und in Bezug auf einen der Pfosten (11) zusammenklappbar ist.

6. Das Zubehörteil (1) gemäß Anspruch 5, **dadurch gekennzeichnet, dass** eine Vielzahl von Stützen zum Verankern von Ladungssicherungsbarrieren in den Seitenplatten (4) installiert sind.

7. Das Zubehörteil (1) gemäß einem der vorhergehenden Ansprüche, **dadurch gekennzeichnet, dass** es mindestens eine Rückenplatte umfasst, wobei sich die Rückenplatte quer zu den Längsträgern (8) erstreckt und in Bezug auf einen der Pfosten (11) zusammenklappbar ist.

8. Das Zubehörteil (1) gemäß einem der vorhergehenden Ansprüche, **dadurch gekennzeichnet, dass** es eine am oberen Teil der Pfosten (11) befestigte obere Platte (6) umfasst.

9. Das Zubehörteil (1) gemäß einem der vorhergehenden Ansprüche, **dadurch gekennzeichnet, dass** es sich um ein Zubehörteil (1) zur Verwendung in einem Fahrgestell (3) eines Lastkraftwagens (2), Anhängers oder Sattelanhängers handelt, bestimmt für den Transport von Fracht.

10. Ein Fahrgestell (3) mit variabler Ladekapazität, wobei das Fahrgestell (3) eine strukturelle Aufnahmevorrichtung und ein Zubehörteil (1) umfasst, umfassend:
• ein Kupplungselement (7), das dazu bestimmt ist, mit Gleitfähigkeit entlang der strukturellen Aufnahmevorrichtung teleskopartig befestigt zu werden;
• zwei Längsträger (8), die auf beiden Seiten des Kupplungselements (7) angeordnet sind;
• zwei an den Längsträgern (8) befestigte Pfosten (11), wobei die Pfosten (11) senkrecht zu den Längsträgern (8) stehen und die Höhe und Breite des Zubehörs (1) bestimmen;
wobei das Kupplungselement (7) eine ausgefahrene Position, in der sich das Kupplungselement (7) in Längsrichtung so bewegt, dass die Länge der strukturellen Aufnahmevorrichtung und des Kupplungselements (7) größer ist, und eine eingefahrene Position aufweist, in der die Länge der strukturellen Aufnahmevorrichtung und des Kupplungselements (7) kleiner ist;
wobei das Zubehörteil eine zwischen den Längsträgern (8) angeordnete untere Platte (5) umfasst, sodass sich die Platte (5) in der eingefahrenen Position teilweise auf einer festen Auflagefläche in Bezug auf das Fahrgestell (3) befindet, und die Platte (5) in der ausgefahrenen Position neben der Auflagefläche angeordnet ist;
**dadurch gekennzeichnet, dass** das Zubehörteil Keile in der unteren Platte (5) umfasst, die sich im vorderen Bereich der Platte (5) an den Profilen des Kupplungselements (7) befinden.

11. Das Fahrgestell (3) gemäß Anspruch 10, **dadurch gekennzeichnet, dass** die strukturelle Aufnahmevorrichtung ein rohrförmiges, das Kupplungselement (7) darin aufnehmendes Element ist.

12. Das Fahrgestell (3) gemäß einem der Ansprüche 10 oder 11, **dadurch gekennzeichnet, dass** es einen Aktuator zum Bewegen des Kupplungselements (7) zwischen der ausgefahrenen Position und der eingefahrenen Position umfasst.

13. Das Fahrgestell (3) gemäß Anspruch 12, **dadurch gekennzeichnet, dass** der Aktuator ein hydraulischer Aktuator ist.

14. Das Fahrgestell (3) gemäß einem der Ansprüche 10 bis 13, **dadurch gekennzeichnet, dass** es eine obere Platte (6) umfasst.

15. Das Fahrgestell (3) gemäß einem der Ansprüche 10 bis 14, **dadurch gekennzeichnet, dass** das Fahrgestell (3) ein Fahrgestell eines Lastkraftwagens (2), Anhängers oder Sattelanhängers ist, das für den Transport von Fracht bestimmt ist.

## Revendications

1. Un accessoire de stockage variable (1) pour le couplage de celui-ci à un châssis (3), ledit châssis ayant un récepteur structurel fixé au châssis, l'accessoire (1) comprenant :
• un élément d'accouplement (7) destiné à être fixé avec une capacité de glissement le long du récepteur structurel de manière télescopique ;
• deux poutres longitudinales (8) situées de chaque côté de l'élément d'accouplement (7) ;
• deux montants (11) fixés aux poutres longitudinales, lesdits montants (11) étant perpendiculaires aux poutres longitudinales (8) et définissant la hauteur et la largeur de l'accessoire (1) ;
dans lequel l'élément d'accouplement (7) présente une position déployée dans laquelle l'élément d'accouplement (7) se déplace longitudinalement, éloignant les montants (11) du châssis (3), et une position contractée dans laquelle l'élément d'accouplement (7) se déplace longitudinalement, rapprochant les montants (11) du châssis (3) ;
dans lequel l'accessoire comprend un panneau inférieur (5) disposé entre les poutres longitudinales (8), de telle sorte que, dans la position contractée, le panneau (5) est partiellement situé sur une surface de support associée au châssis (3), et dans la position déployée, le panneau (5) est disposé à proximité de la surface de support ;
**caractérisé en ce que** l'accessoire comprend des cales dans le panneau inférieur (5), situées dans la zone avant dudit panneau (5) sur les profils de l'élément d'accouplement (7).

2. L'accessoire (1) selon la revendication 1, **caractérisé en ce que**, dans la partie inférieure de l'élément d'accouplement (7), un support, qui se déplace de manière intégrale avec l'accessoire (1), est installé dans une position normale au sol.

3. L'accessoire (1) selon l'une quelconque des revendications précédentes, **caractérisé en ce qu'**il comprend un actionneur (13) pour déplacer l'élément d'accouplement (7) entre la position déployée et la position contractée.

4. L'accessoire (1) selon la revendication 3, **caractérisé en ce que** l'actionneur (13) est un actionneur hydraulique.

5. L'accessoire (1) selon l'une quelconque des revendications précédentes, **caractérisé en ce qu'**il comprend au moins un panneau latéral (4), ledit panneau latéral (4) étant disposé longitudinalement le long de l'une des poutres longitudinales (8) et étant repliable par rapport à l'un des montants (11).

6. L'accessoire (1) selon la revendication 5, **caractérisé en ce qu'**il existe une pluralité de supports pour ancrer des barrières de retenue de chargement installées dans lesdits panneaux latéraux (4).

7. L'accessoire (1) selon l'une quelconque des revendications précédentes, **caractérisé en ce qu'**il comprend au moins un panneau arrière, ledit panneau arrière s'étendant transversalement par rapport aux poutres longitudinales (8) et étant repliable par rapport à l'un des montants (11).

8. L'accessoire (1) selon l'une quelconque des revendications précédentes, **caractérisé en ce qu'**il comprend un panneau supérieur (6) fixé à la partie supérieure des montants (11).

9. L'accessoire (1) selon l'une quelconque des revendications précédentes, **caractérisé en ce qu'**il s'agit d'un accessoire (1) destiné à être utilisé dans un châssis (3) d'un camion (2), d'une remorque ou d'un semi-remorque destiné au transport de marchandises.

10. Un châssis (3) à capacité de stockage variable, le châssis (3) comprenant un récepteur structurel et un accessoire (1) comprenant :
• un élément d'accouplement (7) destiné à être fixé avec une capacité de glissement le long du récepteur structurel de manière télescopique ;
• deux poutres longitudinales (8) situées de chaque côté de l'élément d'accouplement (7) ;
• deux montants (11) fixés aux poutres longitudinales (8), lesdits montants (11) étant perpendiculaires aux poutres longitudinales (8) et définissant la hauteur et la largeur de l'accessoire (1) ;
dans lequel l'élément d'accouplement (7) a une position déployée dans laquelle l'élément d'accouplement (7) se déplace longitudinalement de telle sorte que la longueur du récepteur structurel et de l'élément d'accouplement (7) est plus grande et une position contractée dans laquelle la longueur du récepteur structurel et de l'élément d'accouplement (7) est plus petite ;
dans lequel l'accessoire comprend un panneau inférieur (5) disposé entre les poutres longitudinales (8), de telle sorte que, dans la position contractée, le panneau (5) est partiellement situé sur une surface de support fixe par rapport au châssis (3), et dans la position déployée, le panneau (5) est disposé à proximité de la surface de support ;
**caractérisé en ce que** l'accessoire comprend des cales dans le panneau inférieur (5), situées dans la zone avant dudit panneau (5) sur les profils de l'élément d'accouplement (7).

11. Le châssis (3) selon la revendication 10, **caractérisé en ce que** le récepteur structurel est un élément tubulaire recevant l'élément d'accouplement (7) à l'intérieur de celui-ci.

12. Le châssis (3) selon l'une quelconque des revendications 10 ou 11, **caractérisé en ce qu'**il comprend un actionneur pour déplacer l'élément d'accouplement (7) entre la position déployée et la position contractée.

13. Le châssis (3) selon la revendication 12, **caractérisé en ce que** l'actionneur est un actionneur hydraulique.

14. Le châssis (3) selon l'une quelconque des revendications 10 à 13, **caractérisé en ce qu'**il comprend un panneau supérieur (6).

15. Le châssis (3) selon l'une quelconque des revendications 10 à 14, **caractérisé en ce que** le châssis (3) est un châssis d'un camion (2), d'une remorque ou d'un semi-remorque destiné au transport de marchandises.
